(19) Europäisches Patentamt
European Patent Office
Office européen des brevets

(11) **EP 1 915 545 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **06761835.5**

(22) Anmeldetag: **02.08.2006**

(51) Int Cl.:
**F16C 35/077** (2006.01)

(86) Internationale Anmeldenummer:
**PCT/DE2006/001347**

(87) Internationale Veröffentlichungsnummer:
**WO 2007/022748 (01.03.2007 Gazette 2007/09)**

(54) **BEFESTIGUNGSVORRICHTUNG FÜR EINEN LAGERRING IN EINEM GEHÄUSE**

SECURING DEVICE FOR A BEARING RING IN A HOUSING

DISPOSITIF DE FIXATION POUR UNE BAGUE DE ROULEMENT DANS UN BOITIER

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.08.2005 DE 102005039259**

(43) Veröffentlichungstag der Anmeldung:
**30.04.2008 Patentblatt 2008/18**

(73) Patentinhaber: **Schaeffler KG**
**91074 Herzogenaurach (DE)**

(72) Erfinder:
• **SCHUMACHER, Kay**
**97488 Stadtlauringen (DE)**
• **FÜLLER, Benno**
**97753 Karlstadt (DE)**
• **SCHÖNER, Georg**
**97490 Poppenhausen (DE)**

(56) Entgegenhaltungen:
**EP-A1- 0 678 683      DE-C2- 19 713 333**
**GB-A- 2 010 986      US-A1- 2003 099 419**

## Beschreibung

Gebiet der Erfindung

Die Erfindung betrifft eine Befestigungsvorrichtung für einen Lagerring in einem Gehäuse.

Diese Befestigungsvorrichtung weist einen im Wesentlichen ringförmigen bzw. hohlzylindrischen Grundkörper mit mindestens einem Federelement, welches in eine Ringnut des Gehäuses eingreift, sowie mit zumindest einer abgewinkelten Schulter, an der der Lagerring axial abstützbar ist, auf.

Die Befestigungsvorrichtung sitzt dabei im Wesentlichen mit ihrem Grundkörper außen auf dem Lagerring und hält bzw. sichert diesen über das mindestens eine Federelement sowie die mindestens eine abgewinkelte Schulter zumindest in axialer Richtung im Gehäuse.

## Hintergrund der Erfindung

Eine derartige Befestigungsvorrichtung, eine Sicherungshülse bzw. -ring, ist in DE197 13 333 C2 beschrieben.

Mit dieser Sicherungshülse bzw. -ring ist der Außenring eines Radlagers in einem Gehäuse axial gesichert.

Der Sicherungsring, in diesem Fall aus Blech, weist einen zumeist hohlzylindrisch ausgebildeten Grundkörper auf, mit dem der Sicherungsring radial außen auf dem Lageraußenring, kurz auch Lagerring, sitzt.

Vom Grundkörper des Sicherungsrings gehen Federelemente ab. Die Federelemente sind vom Sicherungsring - in Bezug auf eine Rotationsachse des Lageraußenrings bzw. des Radlagers - radial schräg nach außen abgespreizt und greifen bzw. rasten in eine Ringnut des Gehäuses ein. Die Ringnut ist in einer Bohrung des Gehäuses ausgebildet und radial nach innen offen.

Von dem Grundkörper des Sicherungsringes geht radial in Richtung der Rotationsachse eine zumeist scheibenförmige Schulter ab. Die Schulter ist von dem Grundkörper abgewinkelt und hintergreift den Lageraußenring an einer Stirnseite so, dass der Lageraußenring in eine axiale Richtung an der Schulter des Sicherungsringes abgestützt ist.

Die Federelemente sind bei dem Sicherungsring des beschriebenen Stands der Technik aus dem Grundkörper ausgestanzt und radial schräg nach außen aufgespreizt.

Es entstehen so Ausstanzungen im Grundkörper des Sicherungsrings, die diesen schwächen.

Die Sicherung des Lagerrings des Lagers im Gehäuse durch diesen Sicherungsring ist deshalb oft nicht steif genug ausgeführt, so dass der Lageraußenring, wenn auch innerhalb eines begrenzten Betrages, axial in dem Gehäuse wandert.

Der Sicherungsring wird - beim Einbau - zunächst fest auf den Lageraußenring aufgepresst. Beim Einführen des Lageraußenringes in das Gehäuse trifft dabei eine schräg nach außen gewandte Seite der Federelemente des Sicherungsrings auf eine Kante am Rand des Lagersitzes.

Jedes der Federelemente federt durch die Berührung mit der Kante soweit elastisch in Richtung der Ausstanzungen ein bzw. federt in die jeweilige der Ausstanzungen ein, bis der Lageraußenring mit dem Sicherungsring in das Gehäuse eingeführt werden kann.

Wenn der Lagering in seiner Endposition ist, federn die Federelemente elastisch auf und rasten in die Ringnut ein.

Bei Befestigungen bzw. in Befestigungsanordnungen mit solchen Sicherungsringen aus dem Stand der Technik sind bei Auslegung der Abmessungen der Ringnut am Gehäuse sämtliche Toleranzen, die Einfluss auf die Lage (Sollposition) der Federelemente des Sicherungsrings zur Ringnut haben können, so berücksichtigt, dass die Federelemente innerhalb Grenzen zulässiger Abweichungen von der Sollposition immer frei in die Ringnut auffedern können.

Die Federelemente greifen deshalb in der Regel mit relativ großem axialem Spiel in die Ringnut ein und stützen sich nicht bzw. nicht spielfrei in der Nut ab.

Der Lageraußenring - und damit auch das Lager an sich - können unter Last, d.h. unter radialer und/oder axialer bzw. statischer und/oder dynamischer Last, und nach längerem Betrieb innerhalb dieses Spiels im Gehäuse axial wandern.

Axiales Wandern des Lagerringes bzw. des Lagers ist nachteilig für die Lebensdauer der Lager, ist in der Regel von störenden Knackgeräuschen begleitet und wirkt sich nachteilig auf die Genauigkeit von Messsignalen einer an dem Lager angeordneten Messsensorik aus.

## Zusammenfassung der Erfindung

Die Aufgabe der Erfindung ist es daher, eine Befestigungsvorrichtung zu schaffen, mit der die zuvor genannten Nachteile vermieden werden. Insbesondere soll durch die Erfindung die axiale Bewegung eines Lagerrings bzw. eines Lagers im Gehäuse unter dynamischer und/oder statischer Belastung verhindert bzw. zumindest weitgehend eingeschränkt werden.

Diese Aufgabe wird durch die Befestigungsvorrichtung mit den Merkmalen gemäß dem unabhängigen Anspruch gelöst. Bevorzugte Weiterbildungen der Erfindung ergeben sich aus den abhängigen Ansprüchen.

Die erfindungsgemäße Befestigungsvorrichtung für einen Lagerring, insbesondere eines Radlagers, in einem Gehäuse weist einen im Wesentlichen hohlzylindrischen, insbesondere radial außen auf dem Lagerring aufsitz- bzw. aufsetzbaren, Grundkörper mit mindestens einem Federelement für einen Eingriff in eine Ringnut des Gehäuses sowie mit mindestens einer den Lagerring axial abstützbaren, abgewinkelten Schulter auf.

Das mindestens eine Federelement ist hakenförmig von dem Grundkörper aus radial nach außen und zumindest teilweise in die axiale Richtung zurück abgewinkelt ausgebildet. Weiter ist an der Befestigungsvorrichtung mindestens ein Schubelement, beispielsweise eine Schublasche, angeformt, welches derart mit dem mindestens einen Federelement wirkverbunden ist, dass durch Betätigung des mindestens einen Schubelements das mindestens eine Federelement, insbesondere axial, vor- und/oder verspannbar ist.

Abweichend vom beschriebenen Stand der Technik ist das mindestens eine Federelement nicht aus dem Grundkörper ausgestanzt und nach außen ausgestellt, sondern bei der Herstellung aus einer axialen Verlängerung des Grundkörpers radial nach außen umgelegt.

Durch das zusätzliche mindestens eine, mit dem mindestens einen Federelement wirkverbundenen Schubelement bzw. durch dessen Betätigungen beim Einpressen des Lagers in das Gehäuse kann das mindestens eine Federelement beim Einpressen des Lagers - die Befestigungsvorrichtung, beispielsweise ein Sicherungsring, sitzt dabei auf dem Lagerring - axial vorgespannt werden und kann in die dafür vorgesehene Ringnut im Gehäuse einrasten.

Auf Grund der axialen Federung des mindestens einen Federelements mittels Betätigung des mindestens einen Schubelements kann ein größerer Federweg - als bei herkömmlichen Tellerfedern - realisiert werden, wodurch eine Überbrückung eines sich durch Bauteiltoleranten ergebenden Spaltes - insbesondere zwischen der Befestigungsvorrichtung und der Gehäusenut - erreicht werden kann.

Entsprechend dem mindestens einen Federelement kann das mindestens eine Schubelement ebenfalls hakenförmig von dem Grundkörper aus radial nach außen und zumindest teilweise in die axiale Richtung zurück abgewinkelt ausgebildet sein.

Bei der Betätigung des mindestens einen Schubelements kann dann dieses bevorzugt in einem Endbereich, insbesondere an einer Stirnseite, des axial zurückabgewinkelten Bereichs im Wesentlichen axial belastbar werden.

Dazu kann beispielsweise ein übliches, im Stand der Technik bekanntes Montagewerkzeug zum Einpressen eines Lagers ins Gehäuse verwendet werden. An diesem ist - an der Kontaktfläche zum mindestens einen Schubelement - nur eine zusätzliche Nut geringer Tiefe vorzusehen, um ein Abrutschen oder Wegklappen des Schubelements beim Einpressvorgang zu verhindern.

Nach einem Wegfahren des Montagewerkzeugs und dabei einem "Entspannen" der Befestigungsvorrichtung wird das mindestens eine Federelement an einer Begrenzungsfläche, beispielsweise eine Rampe, der Gehäusenut angelegt - je nach Toleranzlage mit mehr oder weniger axialer Vorspannung.

Auch kann eine eventuell auftretende plastische, radial nach innen ausgebildete Verformung des mindestens einen Federelements durch das Einpressen in das Gehäuse, welche den Sitz des Federelements im Gehäuse beeinflussen kann, durch das Nachdrücken des Federelements mittels des mindestens einen Schubelements am Ende des Einpressvorgangs zumindest teilweise wieder rückgängig gemacht werden.

Weiterhin kann vorgesehen sein, dass das mindestens eine Schubelement und das mindestens eine Federelement derart miteinander wirkverbunden sind, dass bei der axialen Belastung des Endbereichs des axial zurückabgewinkelten Bereichs des mindestens einen Schubelements das mindestens eine Federelement in der Ringnut elastisch gegen das Gehäuse vor- und/oder verspannbar ist.

Auch kann vorgesehen sein, dass das mindestens eine Schubelement und das mindestens eine Federelement derart miteinander wirkverbunden sind, dass bei der axialen Belastung des Endbereichs des axial zurückabgewinkelten Bereichs des mindestens einen Schubelements der zumindest teilweise in die axiale Richtung zurückabgewinkelte Bereich des mindestens einen Federelements radial vom Grundkörper abspreizbar ist.

Besonders bevorzugt ist das mindestens eine Federelement (11) aus zumindest einem, insbesondere einstückig an dem Grundkörper angeformten, insbesondere im Wesentlichen radial nachgiebigen, Federkragen (10) gebildet, wobei der Federkragen (10) unter Ausbildung eines ersten Biegeradius so umgestülpt ist, dass der Federkragen (10) zumindest teilweise axial über den Grundkörper (8) ragt.

Ebenso besonders bevorzugt kann das mindestens eine Schubelement aus einem, insbesondere einstückig an dem Grundkörper angeformten, insbesondere im Wesentlichen axial nachgiebigen, Schubkragen gebildet sein, wobei der Schubkragen unter Ausbildung eines zweiten Biegeradius so umgestülpt ist, dass der Schubkragen zumindest teilweise, insbesondere im Gesamten, axial über den Grundkörper ragt.

Zu einer Versteifung des mindestens einen Schubelements kann dessen Schubkragen in axialer Richtung V-förmig ausgebildet sein.

Ferner kann bevorzugt vorgesehen werden, dass der Schubkragen des mindestens einen Schubelements axial um einen vorgebbaren Überstand über den Grundkörper hinaus- und/oder um einen vorgebbaren Überstand über eine axiale Stirnfläche der Befestigungsvorrichtung hinausragt.

Der Überstand kann dabei in Abhängigkeit eines Spalts bzw. einer Größe eines Spaltes zwischen der Befestigungsvorrichtung und der Ringnut des Gehäuses ausgebildet sein, wobei insbesondere der Überstand größer als der Spalt ausgebildet ist.

Anders ausgedrückt, der Überstand des Schubelements gegenüber der Stirnfläche der Befestigungsvorrichtung, insbesondere des Sicherungsrings, kann bevorzugt größer als ein sich theoretisch ergebender Spalt zwischen der Befestigungsvorrichtung bzw. dem Sicherungsring und der Gehäusenut gewählt werden, um die Spielfreiheit nach der Montage zu gewährleisten.

Weiterhin wird der bei der Montage des Lagers in das Gehäuse zurückgelegte Federweg des mindestens einen Federelements durch den Überstand bestimmt.

Bevorzugt kann auch vorgesehen sein, dass der Federkragen des mindestens einen Federelements und der Schubkragen des mindestens einen Schubelements zumindest teilweise im Bereich der Umstülpung, insbesondere bis oberhalb des ersten und/oder zweiten Biegeradius, einstückig miteinander verbunden sind.

Hierdurch kann eine größtmögliche Krafteinleitung und somit eine maximale Verformung des mindestens einen Federelements erreicht werden.

Ferner kann - zur Verbesserung des Federwirkung der Befestigungsvorrichtung - vorgesehen sein, dass der Federkragen des mindestens einen Federelements radial weiter abragt als der Schubkragen des mindestens einen Schubelements.

Weiterhin kann die Befestigungsvorrichtung derart weitergebildet sein, dass der Federkragen des mindestens einen Federelements und der Schubkragen des mindestens einen Schubelements zumindest zum Teil, insbesondere in dem Teil in dem der Federkragen und der Schubkragen jeweils axial über den Grundkörper ragen, durch einen im Wesentlichen axialen Schlitz umfangsseitig der Befestigungsvorrichtung voneinander getrennt sind.

Weiterhin kann vorgesehen sein, dass der Schubkragen in axialer Richtung im Wesentlichen V-förmig ausgebildet ist und/oder die Befestigungsvorrichtung (7) aus Blech, insbesondere ein Sicherungs-/Clipring aus Blech, ist.

In einer besonders bevorzugten Ausbildung ist vorgesehen, dass die mindestens eine Schulter (9) axial an dem Lagerring (2) anliegt, dass sich die Befestigungsvorrichtung (7), insbesondere ein Sicherungsring, von der einstückig an dem hohlzylindrischen Grundkörper angeformten Schulter (9) weg in dem hohlzylindrischen Grundkörper (8) axial fortsetzt, dass der hohlzylindrische Grundkörper (8) axial in wenigstens einen einstückig angeformten sickenartig gebogenen Abschnitt der Befestigungsvorrichtung (7) übergeht, dass die Befestigungsvorrichtung (7) an dem Abschnitt radial nach außen und in Richtung der Ringnut (13) gebogen ist und dass sich die Befestigungsvorrichtung (7) zumindest ab dem Abschnitt in das mindestens eine einstückig angeformte Federelement (11) und das mindestens eine einstückig angeformte Schubelement fortsetzt, wobei insbesondere das mindestens eine, insbesondere elastische, Federelement (11) vom Lagerring (2) weg weiter nach außen abgespreizt ist als das mindestens eine Schubelement und/oder das mindestens eine Federelement (11) vom Lagerring (2) weg nach außen in die Ringnut (13) abgespreizt ist.

Dabei kann vorgesehen werden, dass sich der Abschnitt in mehrere, umfangsseitig jeweils zueinander benachbarte, insbesondere in Wesentlichen durch axiale Schlitze getrennte, Federelementen und Schubelemente fortsetzt, wobei insbesondere die Federelemente jeweils zwei benachbarte Schubelemente aufweisen und/oder eine Anzahl der Feder- und/oder Schubelemente in Abhängigkeit eines (Innen-)Durchmessers der Befestigungsvorrichtung (1) bzw. des Sicherungsrings gewählt ist.

Anders ausgedrückt, je nach Größe des Sicherungsrings - d.h. Durchmesser des Sicherungsrings und somit einer Länge von umfangsseitigen Segmenten des Sicherungsrings - können mehrere Schubelemente bzw. Schublaschen vorgesehene werden, um eine Verformung bzw. Durchbiegung der Federelemente zu minimieren.

Ferner kann - um die (axiale) Federwirkung der Befestigungsvorrichtung zu verbessern - die Befestigungsvorrichtung im Wesentlichen im Bereich von gerundeten Übergängen (Radien und einen teil des hohlzylindrischen Bereichs des Grundkörpers) geringere Materialsstärken als in den übrigen Bereichen aufweisen.

Ferner kann besonders bevorzugt vorgesehen sein, dass die Schulter (9) scheibenförmig ausgebildet ist, und dass die Schulter (9) in der Befestigungsvorrichtung (1) axial federelastisch gegen den Lagerring (2) vorgespannt ist.

Weiterhin kann vorgesehen werden, dass der Lagerring (2) axial an einem zum Gehäuse (5) festen Axialanschlag (6) anliegt, dass die Schulter (9) axial an dem Lagerring (2) anliegt und dass der Lagerring (2) mittels des in der Ringnut (13) abgestützten mindestens einen Federelements (11) über die Schulter (9) axial elastisch gegen den Axialanschlag (6) vorgespannt ist.

Weiterhin kann vorgesehen sein, dass die Befestigungsvorrichtung, beispielsweise ein Sicherungsring, an der von der Schulter abgewandten Seite des Sicherungsringes wenigstens eine, jedoch vorzugsweise mehr, sickenartige Verstärkungen an dem Feder- und/oder an dem Schubelement bzw. nahe dem Feder- und/oder dem Schubelement aufweisen kann.

Der Sicherungsring ist dadurch sehr steif, da der Grundkörper nicht durch Ausstanzungen geschwächt ist. Der Widerstand der Befestigungsvorrichtung gegen axiale Verformung ist mit der sickenartigen Ausbildung erhöht, wenn jedes einzelne der Federelemente von mehreren vorhandenen Federelementen sickenartig verstärkt ist.

Weiterhin kann vorgehen sein, das die Befestigungsvorrichtung, in diesem Fall ein Sicherungsring, vorzugsweise aus Blech, das Grundkörper bevorzugt hohlzylindrisch aber auch beliebig anders ausgebildet ist. Die Schulter ist vom Grundkörper radial nach innen rechtwinklig oder mit beliebigen anderen Winkeln zum Grundkörper abgewinkelt und liegt zumindest teilweise axial an dem Lagerring an. Das Blech ist aus einer Verlängerung des Grundkörpers radial nach außen umgelegt, so dass der Sicherungsring an der Biegestelle den sickenartigen Abschnitt aufweist. Die Federelemente und die Schublaschen sind je nach Ausführung des Sicherungsringes in den Abschnitt integriert oder setzen sich erst von diesem aus - im Falle der Federelemente - in die Ringnut fort. Es ist somit denkbar, dass der sickenartige Abschnitt als Kragen nicht geschlitzt und die Befestigungsanordnung somit äußerst steif ist. Alternativ erstrecken sich die Schlitze durch den Abschnitt bis zum Grundkörper bzw. axial bis in den Grundkörper.

Das Blech ist zumindest soweit umgelegt, dass die Federelemente in die Ringnut des Gehäuses abgespreizt sind und zumindest in die Ringnut eingreifen. Dazu liegen die Federelemente bevorzugt zumindest teilweise an einer Ringfläche der Ringnut an, die zu der Rotationssymmetrieachse und vorzugsweise mit einem zu 90° kleineren Winkel zu dem hohlzylindrischen Grundkörper geneigt ist.

Eine weitere Ausgestaltung der Erfindung sieht vor, dass die beiden Flanken der Ringnut jeweils durch eine Ringfläche gebildet sind, die einen zu 90° kleineren Winkel zwischen sich einschließen. Die Federelemente liegen bei hohen auf den Lagerring wirkenden axialen Lasten an beiden Flanken an und sind so in der Ringnut optimal steif abgestützt.

Die Schulter ist in der Befestigungsanordnung vorzugsweise axial federelastisch gegen den Lagerring vorgespannt. Dazu ist die Schulter in dem Ausgangszustand vor der Montage der Befestigungsanordnung zu dem hohlzylindrisch ausgebildete Grundkörper im spitzen Winkel geneigt. Der Grundkörper und die Schulter schließen dabei vor fertig montierter Befestigungsanordnung den spitzen Winkel an der Seite der Schulter zwischen sich ein, an der in der fertig montierten Befestigungsanordnung die Stirnseite des Lagerringes anliegt. Der Lagerring ist so mittels der Schulter axial elastisch gegen den Axialanschlag vorgespannt. Alternativ dazu oder gleichzeitig dazu ist der Sicherungsring mittels der Federelemente in der Ringnut elastisch vorgespannt abgestützt. Dabei wird die Energie der elastisch eingefederten Federelemente auf die Schulter und von der Schulter auf den sich an dem Axialanschlag abstützenden Lagerring übertragen. Der Lagerring ist aufgrund der Vorspannung in der Befestigungsanordnung vorzugsweise in jeder beliebigen Position, die innerhalb zulässiger Toleranzgrenzen von der Sollposition abweicht, axial mittels des Sicherungsringes spielfrei elastisch vorgespannt in der Befestigungsanordnung gehalten.

**Beschreibung der Zeichnungen**

Ein Ausführungsbeispiel der Erfindung ist in Figuren dargestellt und wird im Weiteren erläutert.
Es zeigen

Figur 1  Befestigungsanordnung 1 mit einem Sicherungsring 7 mit Federelementen 11 und Schublaschen 21 gemäß einem Ausführungsbeispiel,
Figur 2  Sicherungsring 7 mit Federelementen 11 und Schublaschen 21 gemäß einem Ausführungsbeispiel,

Figur 3  Ausschnitt (Segment) eines Sicherungsrings 7 mit Federelementen 11 und Schublaschen 21 gemäß einem Ausführungsbeispiel,
Figur 4  Ausschnitt (Teil eines Segments) eines Sicherungsrings 7 mit Federelementen 11 und Schublaschen 21 gemäß einem Ausführungsbeispiel,
Figur 5  Befestigungsanordnung 1 mit einem Sicherungsring 7 mit Federelementen 11 und Schublaschen 21 gemäß einem Ausführungsbeispiel,
Figur 6  Ausschnitt (Teil eines Segments) eines Sicherungsrings 7 mit Federelementen 11 und Schublaschen 21 gemäß einem Ausführungsbeispiel.

**Ausführungsbeispiel: Befestigungsanordnung für einen Lagerring in einem Gehäuse durch einen Sicherungsring bei einem Radlager**

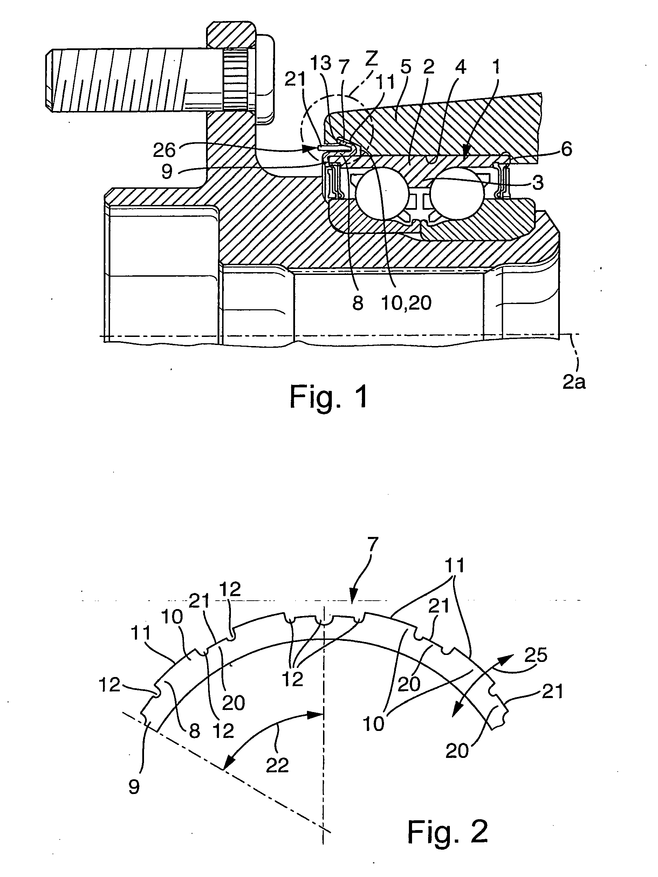

Figur 1 zeigt eine Befestigungsanordnung 1 für ein Radlager 3 in einem Längsschnitt entlang der Rotationssymmetrieachse 2a eines Lagerringes 2 des Radlagers 3.
Das Radlager 3 ist ein zweireihiges abgedichtetes (Schrägkugel-) Lager. Der Lagerring 2, ein Außenring des Radlagers 3, sitzt in einer Bohrung 4 eines fahrzeugseitig festen Gehäuses 5. In die Bohrung 4 ragt radial ein Axialanschlag 6 in Form einer Schulter. Der Lagerring 2 ist in eine axiale Richtung an dem Axialanschlag 6 abgestützt.
In die andere entgegengesetzte axiale Richtung ist der Lagerring 2 mittels eines Sicherungsringes 7 axial gehalten. Der Sicherungsring 7 weist umfangseitig - in Segmenten 22 - ver- bzw. aufgeteilt im Wesentlichen axial verlaufende Federelemente 11 zur axialen Sicherung des Radlagers 3 und Schublaschen 21 zur axialen Vorspannung der Federelemente 11 auf.

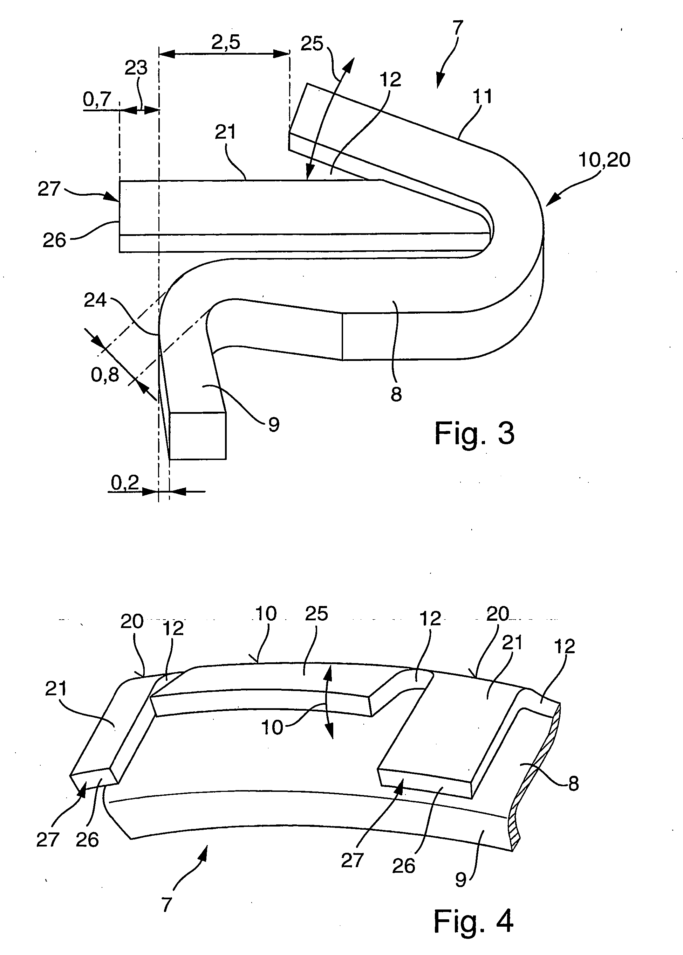

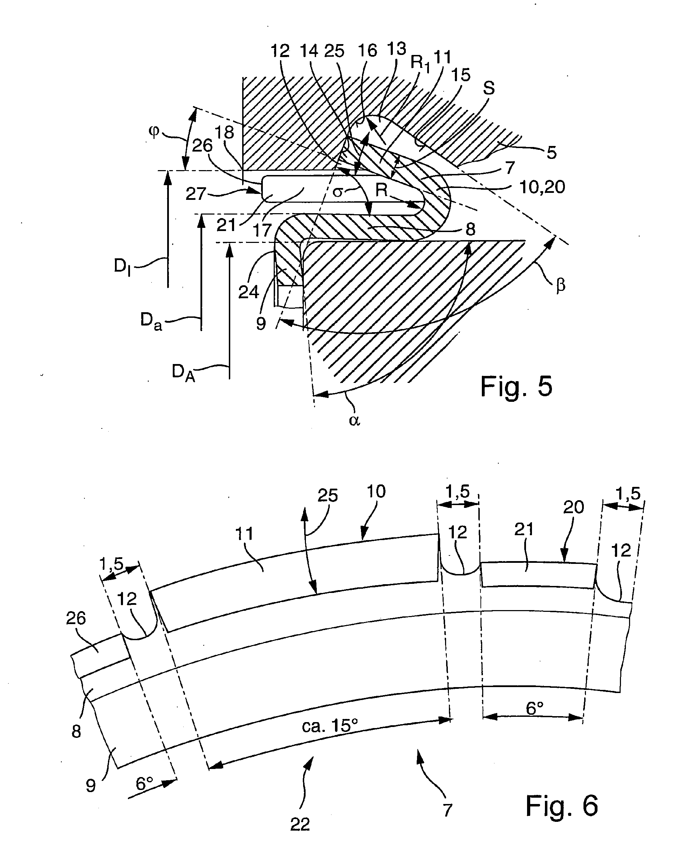

Figur 2 zeigt einen Ausschnitt - gekennzeichnet ist hier ein Segment 22 - des Sicherungsringes 7 von vorne. Figur 3 zeigt den Sicherungsring 7 im Schnitt. Figur 4 zeigt eine dreidimensionale Ansicht eines Ausschnitts des Sicherungsringes 7. Figur 5 stellt das Detail Z aus Figur 1 vergrößert und nicht maßstäblich dar. Fig. 6 zeigt einen Ausschnitt des Sicherungsringes 7 von vorne.
Der Sicherungsring 7 ist aus Blech und weist einen Grundkörper 8 auf. Von dem Grundkörper 8 ist die - eine Tellerfeder ausbildende - Schulter 9 radial nach innen abgewinkelt. Die Schulter 9 ist mit dem Winkel $\alpha$ zu dem hohlzylindrisch gestalteten Grundkörper 8 geneigt (Figur 5). Der Winkel $\alpha$ ist < 90°, kann aber auch > = 90° sein.
Der Grundkörper 8 setzt sich an einer von der Schulter 9 weg weisenden axialen Seite in einem sickenartig ausgebildeten, umfangseitig umlaufenden Kragen 10, 20 bzw. Abschnitt 10, 20 fort.
An dem Abschnitt 10 bzw. 20 ist der Sicherungsring 7, wie insbesondere aus den Figuren 3 und 4 ersichtlich ist, umfangseitig umlaufend so umgestülpt, dass dieser mit den dadurch ausgebildeten Federelementen 11 sowie mit den dadurch ausgebildeten Schublaschen 21 jeweils zumindest teilweise axial über den Grundkörper 8 ragt.

Über die Umstülpung bzw. im Bereich der Umstülpung sind die Federelemente 11 und die Schublaschen 21 miteinander wirkverbunden bzw. derart gekoppelt, dass bei axialer Krafteinleitung 27 in die Schublaschen 21 bzw. axialer Kraftaufbringung auf die Schublaschen 21, wie beispielsweise beim Einpressen des Radlagers 3 in das Gehäuse 5 (axiale Betätigung 27), die Federelemente 11 axial vorspannbar sind.

Wie hier insbesondere Fig.3 verdeutlicht, ragen die Schubkragen 20 axial jeweils um einen - in Fig.3 angedeuteten - vorgebbaren Überstand 23 über den Grundkörper 8 bzw. über eine axiale Stirnfläche des Sicherungsrings 7 hinaus.

Dieser Überstand 23 der Schublaschen 21 bestimmt den bei der Montage bzw. Einpressen des Radlagers 3 in das Gehäuse 5 zurückgelegten Federweg 25 der Federelemente 11. Durch diese Schublaschen 21 an den Federelementen 11 bzw. durch diese - über den gemeinsamen Kragen 10, 20 - mit den Federelementen 11 gekoppelten Schublaschen 21 werden die Federelemente 11 beim Einpressen (axiale Betätigung 27) in das Gehäuse 5 axial vorgespannt und rasten in eine dafür vorgesehene Ringnut 13 im Gehäuse 5 ein.

Der in Umfangsrichtung umlaufende Kragen 10, 20 - aufgeteilt in Segmente 22 - weist umfangsseitig, oberhalb des Biegeradius des Kragens 10, 20 ansetzende bzw. beginnende (Trenn-)Schlitze 12 auf. Die Schlitze 12 trennen sowohl Federelemente 11 von Schublaschen 21 als auch Schublaschen 21 von Schublaschen 21 umfangsseitig voneinander. Wie insbesondere aus Figur 4 ersichtlich ist, setzen sich die oberhalb des Biegeradius ansetzenden Schlitze 12 zwischen den Federelementen 11 und Schublaschen 21 in dem Kragen 10 und axial über dem Grundkörper 8 fort.

Wie hier Fig.2 weiter verdeutlicht weist ein solches Segment 22 zwei Federelemente 11 auf, deren jedes durch zwei benachbarte Schublaschen 21 - insgesamt drei Schublaschen 21 pro Segment - eingefasst ist.

Die Federelemente 11 sind außen hakenartig vom Grundkörper 8 so zurück umgebogen, dass sie in eingebautem Zustand in die Ringnut 13 des Gehäuses 5 hinein vom Sicherungsring 7 mit einem Winkel φ abgespreizt sind.

Dabei sind die Federelemente 11 innen mit dem Radius R gebogen. φ ist < 45°, kann aber auch > = 45° sein.

Die Schublaschen 21 sind ebenfalls außen hakenartig vom Grundkörper 8 zurück umgebogen, wobei in diesem Fall die Biegung derart ausgeführt ist, dass die Schublaschen 21 annähernd achsparallel über den Grundkörper 8 verlaufen.

Der Sicherungsring 7 mit Blech aus Federstahl wird bei der Montage der Befestigungsanordnung 1 unter Verwendung eines Montagemittels bzw. - werkzeugs zunächst auf den Lagerring 2 aufgesetzt, axial aufgeschoben bzw. aufgepresst oder alternativ dazu in den Ringspalt 17 zwischen dem Lagerring 2 und dem Gehäuse 5 eingeführt.

In dem Montagewerkzeug sind - im Unterschied zu bisher üblichen Montagewerkzeugen- zusätzliche Nuten mit einer Tiefe von 0,2 mm eingearbeitet, in welche - beim Einpressen des Lagers 3 in das Gehäuse 5 - die axialen Enden 26 der Schublaschen 21 aufgenommen werden, wodurch ein Wegklappen der Schublaschen 21 beim Einpressen verhindert wird.

Im axialen Vor- bzw. Einschub treffen dabei die Federelemente 11 auf die Kante 18 der Bohrung 4 und federn radial ein. Die Federelemente 11 können maximal nur soweit einfedern, bis diese radial an dem Grundkörper 8 anliegen. Der Innendurchmesser $D_1$ ist deshalb größer als die Summe aus dem Zweifachen der größten Blechdicke S der Federelemente 11 und dem Außendurchmesser $D_a$ des auf dem Außendurchmesser $D_A$ des Lagerrings 2 sitzenden Grundkörpers 8:

$$D_l > (2S + D_a).$$

Durch die Schublaschen 21 - gekoppelt an die Federelemente 11 - werden diese beim Einpressen (axiale Betätigung 27) in das Gehäuse 5 axial vorgespannt und rasten im weiteren Vor- bzw. Einschub in die dafür vorgesehene Ringnut 13 im Gehäuse 5 ein.

Die Ringnut 13 weist dazu zwei einander zugewandte Flanken in Gestalt der Ringflächen 14 und 15 auf. Die Ringfläche 14 weist in Richtung des Axialanschlags 6 und ist der Rotationssymmetrieachse 2a zu geneigt. Die Ringfläche 14 und der Grundkörper 9 schließen einen Winkel δ zwischen sich ein. δ ist < 90°, kann aber auch > = 90° sein.

An der Ringfläche 14 liegen die Federelemente 11 mit axialer Vorspannung an. Der Ringfläche 14 und der Rotationssymmetrieachse 2a ist die Ringfläche 15 zugewandt. Die Ringflächen 14 und 15 gehen im Nutgrund 16 der Ringnut 13 ineinander über. Der Nutgrund 16 ist mit dem Radius $R_1$ verrundet. Die Ringflächen 14 und 15 sind mit dem Winkel β zueinander geneigt, der kleiner als 90° ist - aber auch > = 90° sein kann.

Die Schulter 9 ist federelastisch gegen den Lagerring 2 vorgespannt und kann dabei mindestens soweit elastisch axial nachgeben, bis der im Ausgangszustand spitzwinklige Winkel α mindestens 90° oder größer als 90° ist. Die Schulter 9 spannt den Lagerring 2 axial gegen den Axialanschlag 6 vor. Dabei ist die Schulter 9 axial in entgegengesetzte axiale Richtung über die Federelemente 11 an der Ringfläche 14 im Wesentlichen spielfrei abgestützt.

Es ist denkbar, dass die Federelemente 11 in der Ringnut 13 elastisch gegen das Gehäuse 5 vorgespannt sind. Die elastische Vorspannung überträgt sich in dem Fall über die Schulter 9 auf den Lagerring 2 und presst diesen axial gegen den Axialanschlag 6.

**Bezugszeichen**

| | |
|---|---|
| 1 | Befestigungsanordnung |
| 2 | Lagerring |
| 2a | Rotationssymmetrieachse |
| 3 | Radlager |
| 4 | Bohrung |
| 5 | Gehäuse |
| 6 | Axialanschlag |
| 7 | Sicherungsring |
| 8 | Grundkörper |
| 9 | Schulter |
| 10 | Abschnitt/Kragen |
| 11 | Federelement |
| 12 | Schlitz |
| 13 | Ringnut |
| 14 | Ringfläche |
| 15 | Ringfläche |
| 16 | Nutgrund |
| 17 | Ringspalt |
| 18 | Kante |
| 20 | Abschnitt/Kragen |
| 21 | Schublasche |
| 22 | Segment |
| 23 | Überstand |
| 24 | Stirnseite |
| 25 | Federweg |
| 26 | axiales Ende |
| 27 | axiale Betätigung |

**Patentansprüche**

1. Befestigungsvorrichtung (1) für einen Lagerring (2) in einem Gehäuse (5), mit einem im Wesentlichen hohlzylindrischen, insbesondere radial außen auf dem Lagerring (2) aufsitzbaren, Grundkörper (8) mit mindestens einem Federelement (11) für einen Eingriff in eine Ringnut (13) des Gehäuses (5) sowie mit mindestens einer den Lagerring (2) axial abstützbaren, abgewinkelten Schulter (9), wobei

   - das mindestens eine Federelement (11) hakenförmig von dem Grundkörper (8) aus radial nach außen und zumindest teilweise in die axiale Richtung zurück abgewinkelt ausgebildet ist, **dadurch gekennzeichnet, dass**
   - an der Befestigungsvorrichtung (1) mindestens ein Schubelement (21) angeformt ist, welches derart mit dem mindestens einen Federelement (11) wirkverbunden ist, dass durch Betätigung des mindestens einen Schubelements (21) das mindestens eine Federelement (11), insbesondere axial, vor- und/oder verspannbar ist.

2. Befestigungsvorrichtung nach Anspruch 1, **dadurch gekennzeichnet, dass** mindestens eine Schubelement (21) hakenförmig von dem Grundkörper (8) aus radial nach außen und zumindest teilweise in die axiale Richtung zurück abgewinkelt ausgebildet ist, wobei bei der Betätigung des mindestens Schubelements (21) dieses insbesondere in einem Endbereich, insbesondere an einer Stirnseite, des axial zurückabgewinkelten Bereichs im Wesentlichen axial belastbar ist.

3. Befestigungsvorrichtung nach einem der voranstehenden Ansprüche, **dadurch gekennzeichnet, dass** das mindestens eine Schubelement (21) und das mindestens eine Federelement (11) derart miteinander wirkverbunden sind, dass bei der axialen Belastung des Endbereichs (26) des axial zurückabgewinkelten Bereichs des mindestens einen Schubelements (21) das mindestens eine Federelement (11) in der Ringnut (13) elastisch gegen das Gehäuse (5) vor- und/oder verspannbar ist.

4. Befestigungsvorrichtung nach einem der voranstehenden Ansprüche, **dadurch gekennzeichnet, dass** das mindestens eine Schubelement (21) und das mindestens eine Federelement (11) derart miteinander wirkverbunden sind, dass bei der axialen Belastung des Endbereichs (26) des axial zurückabgewinkelten Bereichs des mindestens einen Schubelements (21) der zumindest teilweise in die axiale Richtung zurückabgewinkelte Bereich des mindestens einen Federelements (11) radial vom Grundkörper (8) abspreizbar ist.

5. Befestigungsvorrichtung nach einem der voranstehenden Ansprüche, **dadurch gekennzeichnet, dass** das mindestens eine Federelement (11) aus zumindest einem, insbesondere einstückig an dem Grundkörper angeformten, Federkragen (10) gebildet ist, wobei der Federkragen (10) unter Ausbildung eines ersten Biegeradius so umgestülpt ist, dass der Federkragen (10) zumindest teilweise axial über den Grundkörper (8) ragt und/oder das mindestens eine Schubelement (21) aus einem, insbesondere einstückig an dem Grundkörper angeformten, Schubkragen (20) gebildet ist, wobei der Schubkragen (20) unter Ausbildung eines zweiten Biegeradius so umgestülpt ist, dass der Schubkragen (20) zumindest teilweise, insbesondere im Gesamten, axial über den Grundkörper (8) ragt.

6. Befestigungsvorrichtung nach einem der voranstehenden Ansprüche, **dadurch gekennzeichnet, dass** der Schubkragen (20) des mindestens einen Schubelements (21) axial um einen vorgebbaren Überstand über den Grundkörper (8) hinaus- und/oder um einen vorgebbaren Überstand über eine axiale Stirnfläche der Befestigungsvorrichtung hinausragt.

7. Befestigungsvorrichtung nach einem der voranstehenden Ansprüche, **dadurch gekennzeichnet, dass** der Federkrage (10) des mindestens einen Federelements (11) und der Schubkragen (20) des mindestens einen Schubelements (21) zumindest teilweise im Bereich der Umstülpung, insbesondere bis oberhalb des ersten und/oder zweiten Biegeradius, einstückig miteinander verbunden sind.

8. Befestigungsvorrichtung nach einem der voranstehenden Ansprüche, **dadurch gekennzeichnet, dass** der Überstand in Abhängigkeit eines Spalts bzw. einer Größe des Spaltes zwischen der Befestigungsvorrichtung und der Ringnut (13) des Gehäuses (5) ausgebildet ist, wobei insbesondere der Überstand größer als der Spalt ausgebildet ist.

9. Befestigungsvorrichtung nach einem der voranstehenden Ansprüche, **dadurch gekennzeichnet, dass** der Federkragen (10) des mindestens einen Federelements (11) radial weiter abragt als der Schubkragen (20) des mindestens einen Schubelements (21).

10. Befestigungsvorrichtung nach einem der voranstehenden Ansprüche; **dadurch gekennzeichnet, dass** der Federkragen (10) des mindestens einen Federelements (11) und der Schubkragen (20) des mindestens einen Schubelements (21) zumindest zum Teil, insbesondere in dem Teil in dem der Federkragen (10) und der Schubkragen (20) jeweils axial, über den Grundkörper (8) ragen, durch einen im Wesentlichen axialen Schlitz (12) umfangsseitig der Befestigungsvorrichtung voneinander getrennt sind.

11. Befestigungsvorrichtung nach einem der voranstehenden Ansprüche, **dadurch gekennzeichnet, dass** der Schubkragen (20) in axialer Richtung im Wesentlichen V-förmig ausgebildet ist und/oder die Befestigungsvorrichtung (7) aus Blech, insbesondere ein Sicherungs-/Clipring aus Blech, ist.

12. Befestigungsvorrichtung nach einem der voranstehenden Ansprüche, **dadurch gekennzeichnet, dass** die mindestens eine Schulter (9) axial an dem Lagerring (2) anliegt, dass sich die Befestigungsvorrichtung (7) von der einstückig an dem hohlzylindrischen Grundkörper (8) angeformten Schulter (9) weg in dem hohlzylindrischen Grundkörper (8) axial fortsetzt, dass der hohlzylindrische Grundkörper (8) axial in wenigstens einen einstückig angeformten sickenartig gebogenen Abschnitt der Befestigungsvorrichtung (7) übergeht, dass die Befestigungsvorrichtung (7) an dem Abschnitt radial nach außen und in Richtung der Ringnut (13) gebogen ist und dass sich die Befestigungsvorrichtung (7) zumindest ab dem Abschnitt in das mindestens eine einstückig angeformte Federelement (11) und das mindestens eine einstückig angeformte Schubelement (21) fortsetzt, wobei insbesondere das mindestens eine, insbesondere elastische, Federelement (11) vom Lagerring (2) weg weiter nach außen abgespreizt ist als das mindestens eine Schubelement (24) und/oder das mindestens eine Federelement (11) vom Lagerring (2) weg nach außen in die Ringnut (13) abgespreizt ist.

13. Befestigungsvorrichtung nach einem der voranstehenden Ansprüche, **dadurch gekennzeichnet, dass** sich der Abschnitt in mehrere, umfangseitig jeweils zueinander benachbarte, insbesondere in Wesentlichen durch axiale Schlitze (12) getrennte, Federelementen (11) und Schubelemente (21) fortsetzt, wobei insbesondere die Federelemente (11) jeweils zwei benachbarte Schubelemente (21) aufweisen und/oder eine Anzahl der Feder- und/oder Schubelemente in Abhängigkeit eines (Innen-) Durchmessers der Befestigungsvorrichtung (1) gewählt ist.

14. Befestigungsvorrichtung nach einem der voranstehenden Ansprüche, **dadurch gekennzeichnet, dass** die Befestigungsvorrichtung im Wesentlichen im Bereich von gerundeten Übergängen geringere Materialsstärken als in den übrigen Bereichen aufweist.

15. Befestigungsvorrichtung nach einem der voranstehenden Ansprüche, **dadurch gekennzeichnet, dass** das mindestens eine Federelement (11) in der Ringnut (13) elastisch gegen das Gehäuse (5) vorgespannt ist.

16. Befestigungsvorrichtung nach einem der voranstehenden Ansprüche, **dadurch gekennzeichnet, dass** die Schulter (9) scheibenförmig ausgebildet ist, und dass die Schulter (9) in der Befestigungsvorrichtung (1) axial federelastisch gegen den Lagerring (2) vorgespannt ist.

17. Befestigungsanordnung mit einer Befestigungsvorrichtung nach einem der voranstehenden Ansprüche, **dadurch gekennzeichnet, dass** der Lagerring (2) axial an einem zum Gehäuse (5) festen Axialanschlag (6) anliegt, dass die Schulter (9) axial an dem Lagerring (2) anliegt und dass der Lagerring (2) mittels des in der Ringnut (13) abgestützten mindestens einen Federelements (11) über die Schulter (9) axial elastisch gegen den Axialanschlag (6) vorgespannt ist.

## Claims

1. Fastening device (1) for a bearing ring (2) in a housing (5), with an essentially hollow-cylindrical basic body (8), in particular capable of being seated radially on the outside of the bearing ring (2), with at least one spring element (11) for engagement into an annular groove (13) of the housing (5) and with at least one angled shoulder (9) capable of supporting the bearing ring (2) axially,

   - the at least one spring element (11) being designed to be angled in hook form from the basic body (8) radially outward and at least partially back into the axial direction, **characterized in that**
   - the fastening device (1) has integrally formed on it at least one push element (21) which is operatively connected to the at least one spring element (11) in such a way that, by the at least one push element (21) being actuated, the at least one spring element (11) can be prestressed and/or braced, in particular axially.

2. Fastening device according to claim 1, **characterized in that** at least one push element (21) is designed to be angled in hook form from the basic body (8) radially outward and at least partially back into the axial direction, during the actuation of the at least one push element (21) the latter being capable of being loaded essentially axially, in particular, in an end region, in particular on an end face, of the region angled axially back.

3. Fastening device according to one of the preceding claims, **characterized in that** the at least one push element (21) and the at least one spring element (11) are operatively connected to one another in such a way that, in the event of axial load on the end region (26) of the axially angled-back region of the at least one push element (21), the at least one spring element (11) can be prestressed and/or braced elastically against the housing (5) in the annular groove (13).

4. Fastening device according to one of the preceding claims, **characterized in that** the at least one push element (21) and the at least one spring element (11) are operatively connected to one another in such a way that, in the event of axial load on the end region (26) of the axially angled-back region of the at least one push element (21), that region of the at least one spring element (11) which is angled back at least partially into the axial direction can be spread radially away from the basic body (8).

5. Fastening device according to one of the preceding claims, **characterized in that** the at least one spring element (11) is formed, from at least one spring collar (10), in particular integrally formed in one piece on the basic body, the spring collar (10) being overturned to form a first bend radius, such that the spring collar (10) projects at least partially beyond the basic body (8) axially, and/or the at least one push element (21) is formed from a push collar (20), in particular integrally formed in one piece on the basic body, the push collar (20) being overturned to form a second bend radius, such that the push collar (20) projects at least partially, in particular altogether, beyond the basic body (8) axially.

6. Fastening device according to one of the preceding claims, **characterized in that** the push collar (20) of the at least one push element (21) projects axially beyond the basic body (8) by the amount of a predetermineable projecting length and/or projects beyond an axial end face of the fastening device by the amount of a predetermineable projecting length.

7. Fastening device according to one of the preceding claims, **characterized in that** the spring collar (10) of the at least one spring element (11) and the push collar (20) of the at least one push element (21) are connected to one another in one piece at least partially in the region of the turnover, in particular to above the first and/or the second bend radius.

8. Fastening device according to one of the preceding claims, **characterized in that** the projecting length is designed as a function of a gap or a size of the gap between the fastening device and the annular groove (13) of the housing (5), in particular the projecting length being designed to be greater than the gap.

9. Fastening device according to one of the preceding claims, **characterized in that** the spring collar (10) of the at least one spring element (11) projects radially further than the push collar (20) of the at least one push element (21).

10. Fastening device according to one of the preceding claims, **characterized in that** the spring collar (10) of the at least one spring element (11) and the push collar (20) of the at least one push element (21) are separated from one another at least partially, in particular in the part in which the spring collar (10) and the push collar (20) project in each case axially beyond the basic body (8), by an essentially axial slot (12) on the circumference of the fastening device.

11. Fastening device according to one of the preceding claims, **characterized in that** the push collar (20) has an essentially V-shaped design in the axial direction and/or the fastening device (7) is made from sheet metal, in particular is a securing/snap ring made from sheet metal.

12. Fastening device according to one of the preceding claims, **characterized in that** the at least one shoulder (9) bears axially against the bearing ring (2), **in that** the fastening device (7) is continued axially away from the shoulder (9), integrally formed in one piece on the hollow-cylindrical basic body (8), in the hollow-cylindrical basic body (8), **in that** the hollow-cylindrical basic body (8) merges axially into at least one portion, integrally formed in one piece and bent in a bead-like manner, of the fastening device (7), **in that** the fastening device (7) is bent at the portion radially outward and in the direction of the annular groove (13), and **in that** the fastening device (7) is continued at least from the portion into the at least one spring element (11) integrally formed in one piece and the at least one push element (21) integrally formed in one piece, in particular the at least one, in particular elastic spring element (11) being spread outward away from the bearing ring (2) further than the at least one push element (21), and/or the at least one spring element (11) being spread outward away from the bearing ring (2) into the annular groove (13).

13. Fastening device according to one of the preceding claims, **characterized in that** the portion is continued into a plurality of spring elements (11) and push elements (21) in each case circumferentially adjacent to one another and, in particular, separated essentially by axial slots (12), in particular the spring elements (11) having in each case two adjacent push elements (21) and/or a number of the spring elements and/or push elements being selected as a function of an (inside) diameter of the fastening device (1).

14. Fastening device according to one of the preceding claims, **characterized in that** the fastening device has smaller material thicknesses essentially in the region of rounded transitions than in the remaining regions.

15. Fastening device according to one of the preceding claims, **characterized in that** the at least one spring element (11) is prestressed elastically against the housing (5) in the annular groove (13).

16. Fastening device according to one of the preceding claims, **characterized in that** the shoulder (9) has a disk-shaped design, and **in that** the shoulder (9) is prestressed spring-elastically against the bearing ring (2) axially in the fastening device (1).

17. Fastening arrangement with a fastening device according to one of the preceding claims, **characterized in that** the bearing ring (2) bears axially against an axial stop (6) fixed with respect to the housing (5), **in that** the shoulder (9) bears axially against the bearing ring (2), and **in that** the bearing ring (2) is elastically prestressed axially against the axial stop (6) via the shoulder (9) by means of the at least one spring element (11) supported in the annular groove (13).

## Revendications

1. Dispositif de fixation (1) pour une bague de roulement (2) dans un boîtier (5), avec un corps de base (8) pour l'essentiel en forme de cylindre creux, pouvant notamment reposer radialement vers l'extérieur sur la bague de roulement (2), avec au moins un élément de ressort (11) pour un engrènement dans une rainure annulaire (13) du boîtier (5) ainsi qu'avec au moins un épaulement (9) coudé pouvant supporter la bague de roulement (2) dans le plan axial, l'au moins un élément de ressort (11) prenant une forme de crochet depuis le corps de base (8) radialement vers l'extérieur et étant coudé au moins en partie en arrière dans la direction axiale, **caractérisé en ce qu'**au moins un élément de poussée (21) est réalisé au niveau du dispositif de fixation (1), ledit élément étant relié de façon active avec l'au moins un élément de ressort (11) de telle sorte que l'actionnement de l'au moins un élément de poussée (21) fait que l'au moins un élément de ressort (11), peut être contraint et/ou précontraint, notamment dans le plan axial.

2. Dispositif de fixation selon la revendication 1, **caractérisé en ce qu'**au moins un élément de poussée (21) est réalisé radialement vers l'extérieur en forme de crochet depuis le corps de base (8) et est coudé en arrière au moins en partie dans la direction axiale, l'actionnement de l'au moins un élément de poussée (21) faisant que celui-ci peut être chargé pour l'essentiel dans le plan axial, notamment dans une zone terminale, notamment au niveau d'une face avant, de la zone coudée vers l'arrière dans le plan axial.

3. Dispositif de fixation selon l'une quelconque des revendications précédentes, **caractérisé en ce que** l'au moins un élément de poussée (21) et l'au moins un élément de ressort (11) sont reliés entre eux de façon active de telle sorte qu'en cas de charge axiale de la zone terminale (26) de la zone coudée vers l'arrière dans le plan axial de l'au moins un élément de poussée (21), l'au moins un élément de ressort (11) peut être contraint et/ou précontraint de façon élastique contre le boîtier (5), dans la rainure annulaire (13).

4. Dispositif de fixation selon l'une quelconque des revendications précédentes, **caractérisé en ce que** l'au moins un élément de poussée (21) et l'au moins un élément de ressort (11) sont reliés entre eux de façon active de telle sorte que, en cas de charge axiale de la zone terminale (26) de la zone coudée vers l'arrière dans le plan axial de l'au moins un élément de poussée (21), la zone au moins en partie coudée en arrière dans la direction axiale de l'au moins un élément de ressort (11) peut s'écarter du corps de base (8) dans le plan radial.

5. Dispositif de fixation selon l'une quelconque des revendications précédentes, **caractérisé en ce que** l'au moins un élément de ressort (11) est formé à partir d'au moins un collet de ressort (10), réalisé notamment d'un seul tenant contre le corps de base, le collet de ressort (10) étant notamment relevé de telle sorte par formation d'un premier rayon de courbure que le collet de ressort (10) ressort au moins en partie dans le plan axial hors du corps de base (8) et/ou l'au moins un élément de poussée (21) étant formé d'un collet de poussée (20) réalisé d'un seul tenant contre le corps de base, le collet de poussée (20) étant relevé de telle sorte par formation d'un second rayon de courbure que le collet de poussée (20) ressort au moins en partie, notamment dans son ensemble, hors du corps de base (8) dans le plan axial.

6. Dispositif de fixation selon l'une quelconque des revendications précédentes, **caractérisé en ce que** le collet de poussée (20) de l'au moins un élément de poussée (21) ressort dans le plan axial d'une certaine distance prédéfinie hors du corps de base (8) et/ou ressort d'une certaine distance prédéfinie hors d'une surface avant axiale du dispositif de fixation.

7. Dispositif de fixation selon l'une quelconque des revendications précédentes, **caractérisé en ce que** le collet de ressort (10) de l'au moins un élément de ressort (11) et le collet de poussée (20) de l'au moins un élément de poussée (21) sont reliés entre eux d'un seul tenant au moins en partie dans la zone de l'écartement, notamment jusqu'en amont du premier et/ou du second rayon de courbure.

8. Dispositif de fixation selon l'une quelconque des revendications précédentes, **caractérisé en ce que** la saillie est réalisée en fonction d'un interstice et/ou de la taille de l'interstice séparant le dispositif de fixation et la rainure annulaire (13) du boîtier (5), la saillie étant notamment plus grande que l'interstice.

9. Dispositif de fixation selon l'une quelconque des revendications précédentes, **caractérisé en ce que** le collet de ressort (10) de l'au moins un élément de ressort (11) ressort davantage dans le plan radial que le collet de poussée (20) de l'au moins un élément de poussée (21).

10. Dispositif de fixation selon l'une quelconque des revendications précédentes, **caractérisé en ce que** le collet de ressort (10) de l'au moins un élément de ressort (11) et le collet de poussée (20) de l'au moins un élément de poussée (21) sont séparés l'un de l'autre au moins en partie dans le plan périphérique du dispositif de fixation, notamment dans la partie dans laquelle le collet de ressort (10) et le collet de poussée (20) ressortent respectivement dans le plan axial hors du corps de base (8), en raison d'une encoche (12) pour l'essentiel axiale.

11. Dispositif de fixation selon l'une quelconque des revendications précédentes, **caractérisé en ce que** le collet de poussée (20) prend pour l'essentiel une forme en V dans la direction axiale et/ou **en ce que** le dispositif de fixation (7) est une tôle et prend notamment la forme d'une bague de fixation/clipsage en tôle.

12. Dispositif de fixation selon l'une quelconque des revendications précédentes, **caractérisé en ce que** l'au moins un épaulement (9) repose contre la bague de roulement (2) dans le plan axial, que le dispositif de fixation (7) se poursuit dans le plan axial de l'épaulement (9) réalisé d'un seul tenant contre le corps de base (8) en forme de cylindre creux jusque dans le corps de base (8) en forme de cylindre creux, **en ce que** le corps de base (8) en forme de cylindre creux ressort dans le plan axial dans au moins un segment du dispositif de fixation (7) courbé et réalisé d'un seul tenant en forme de moulure, que le dispositif de fixation (7) est incurvé radialement vers l'extérieur et en direction de la rainure annulaire (13) au niveau du segment et que le dispositif de fixation (7) se prolonge au moins à partir du segment dans l'au moins un élément de ressort (11) réalisé d'un seul tenant et à partir de l'au moins un élément de poussée (21) réalisé d'un seul tenant, notamment l'au moins un élément de ressort (11), notamment élastique, étant davantage écarté de la bague de roulement (2) vers l'extérieur que l'au moins un élément de poussée (21) et/ou l'au moins un élément de ressort (11) étant écarté de la bague de roulement (2) vers l'extérieur dans la rainure annulaire (13).

13. Dispositif de fixation selon l'une quelconque des revendications précédentes, **caractérisé en ce que** le segment se prolonge en plusieurs éléments de ressort (11) et éléments de poussée (21), respectivement connexes les uns par rapport aux autres dans le plan périphérique, notamment séparés pour l'essentiel par des encoches axiales (12), les éléments de ressort (11) comportant notamment respectivement deux éléments de poussée (21) connexes et/ou un certain nombre d'éléments de poussée et/ou de ressort dépendant d'un diamètre (intérieur) du dispositif de fixation (1).

**14.** Dispositif de fixation selon l'une quelconque des revendications précédentes, **caractérisé en ce que** le dispositif de fixation comporte pour l'essentiel dans la zone des saillies arrondies des renforts de matériaux plus limités que dans les autres zones.

**15.** Dispositif de fixation selon l'une quelconque des revendications précédentes, **caractérisé en ce que** l'au moins un élément de ressort (11) est précontraint de façon élastique contre le boîtier (5) dans la rainure annulaire (13).

**16.** Dispositif de fixation selon l'une quelconque des revendications précédentes, **caractérisé en ce que** l'épaulement (9) prend une forme de disque et **en ce que** l'épaulement (9) est précontraint de façon élastique par ressort dans le plan axial contre la bague de roulement (2) dans le dispositif de fixation (1).

**17.** Agencement de fixation avec un dispositif de fixation selon l'une quelconque des revendications précédentes, **caractérisé en ce que** la bague de roulement (2) repose dans le plan axial contre une butée axiale (6) fixe par rapport au boîtier (5), que l'épaulement (9) repose contre la bague de roulement (2) dans le plan axial et que la bague de roulement (2) est précontrainte de façon élastique dans le plan axial contre la butée axiale (6) à l'aide de l'au moins un élément de ressort (11) soutenu dans la rainure annulaire (13) par l'intermédiaire de l'épaulement (9).



Fig. 1

Fig. 2

Fig. 3

Fig. 4

14

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19713333 C2